Europäisches Patentamt

European Patent Office

Office européen des brevets

(11) Publication number: **0 542 278 A1**

## EUROPEAN PATENT APPLICATION

(21) Application number: **92119385.0**

(22) Date of filing: **12.11.92**

(51) Int. Cl.⁵: **B01J 29/06**, B01J 29/14, C10G 47/20

(30) Priority: **14.11.91 JP 325075/91**

(43) Date of publication of application:
**19.05.93 Bulletin 93/20**

(84) Designated Contracting States:
**BE CH DE FR GB IT LI NL SE**

(71) Applicant: **IDEMITSU KOSAN COMPANY LIMITED**
**1–1, Marunouchi 3–chome Chiyoda–ku Tokyo(JP)**

(72) Inventor: **Iino, Akira**
**c/o Idemitsu Kosan Co.,Ltd., 1280 Kamiizumi Sodegaura–shi, Chiba–ken(JP)**
Inventor: **Nakai, Satoshi**
**c/o Idemitsu Kosan Co.,Ltd., 1280 Kamiizumi Sodegaura–shi, Chiba–ken(JP)**

(74) Representative: **Strehl, Schübel–Hopf, Groening**
**Maximilianstrasse 54 Postfach 22 14 55 W–8000 München 22 (DE)**

(54) Method for preparing a metal–loaded crystalline aluminosilicate and a process for conversion of hydrocarbons by using the same.

(57) A method for preparing an improved, metal–loaded crystalline aluminosilicate comprising bringing a metal–loaded crystalline aluminosilicate into contact with a solution of an alkali metal salt or an alkaline earth metal salt, the metal–loaded crystalline aluminosilicate comprising a crystalline aluminosilicate and at least one transition metal oxide supported on or incorporated into the crystalline aluminosilicate, and a process for conversion of hydrocarbons comprising bringing a hydrocarbon into contact with a hydrocarbon–conversion catalyst, the hydrocarbon–conversion catalyst being prepared from the improved, metal–loaded crystalline aluminosilicate.

EP 0 542 278 A1

BACKGROUND OF THE INVENTION

(a) Field of the Invention

The present invention relates to a method for preparing an improved, metal – loaded crystalline aluminosilicate, particularly the one whose catalytic functions, such as acid properties, are improved, and it also relates to a process for the conversion of hydrocarbons, which is improved in the performance record in reactions, such as selectivity, by the use of an improved catalyst which is prepared by using the improved, metal – loaded crystalline aluminosilicate as a support component.

The improved, metal – loaded crystalline aluminosilicates prepared by the method of the present invention may suitably be used as catalysts which are effective for hydrocarbon – conversion reactions, including the catalytic cracking, hydro – treating, selective isomerization, alkylation or dehydrogenation of hydrocarbons, or as the support components of those catalysts. In particular, they may preferably be used as support materials for preparing catalysts which work effectively for hydrocracking of hydrocarbons, depressing excess or deep cracking thereof. Besides, the process for the conversion of hydrocarbons according to the present invention may advantageously be used in various conversion processes for obtaining intended, useful hydrocarbons from various hydrocarbons, especially in hydrocracking processes for producing middle distillates in a better yield from hydrocarbon distillates having relatively high boiling points, such as atmospheric residues and vacuum residues, by depressing the formation of light distillates, such as naphtha distillates and gas distillates, to sufficiently low levels.

(b) Description of the Related Art

Heretofore, metal – loaded crystalline aluminosilicates, which are crystalline aluminosilicates, such as zeolites, loaded with suitable metal components, have been used as the catalysts for the hydrocracking of hydrocarbons or as the support components of those catalysts. Moreover, such metal – loaded crystalline aluminosilicates have extensively been used, not only as the catalysts for the hydrocracking, but also as those for different conversion reactions of hydrocarbons, for example, the catalytic cracking, hydro – treating, isomerization, dehydrogenation or alkylation of hydrocarbons, or as the support components of those catalysts, wherein, they have been prepared in different ways or by changing the metal components taking into amount of their application fields. In prior arts, although various methods have been employed in the preparation of those metal – loaded crystalline aluminosilicates, such as metal – loaded zeolites, they are generally prepared by depositing or incorporating intended metal compounds on or into crystalline aluminosilicates, such as sodium – type or proton – type zeolites, by using a known loading – method, such as an ion – exchange method, an impregnation method or a dipping method, and, in order to obtain formed materials for catalysts or supports, they are then blended with a binder agent, such as an alumina gel, and then calcined under suitable conditions, at need. Such formed material for catalysts comprising the metal – loaded crystalline aluminosilicates thus prepared are in some cases used, as such or after activated by a suitable pretreatment, such as reduction, as catalysts in an intended reaction. In other cases, used as catalysts supports, they are further processed into supported catalysts by depositing suitable, active metal components on their surfaces, and they are used for indented reactions. For example, certain supported catalysts comprising a metal of the Group VIA of the Periodic Table, such as Mo or W, and a metal of the Group VIII, such as Ni or Co, both of which are supported on a support prepared from a metal – loaded crystalline aluminosilicate in such conventional manners as described above, are known to be highly active for the hydrocracking of hydrocarbon – distillates having relatively high boiling points, such as atmospheric residues and vacuum residues.

However, if such hydrocracking catalysts are prepared by using as the support components the metal – loaded crystalline aluminosilicates prepared by the conventional methods, they frequently cause excess or deep cracking of the hydrocarbons. This is due, for example, to the fact that the acid strength or acidity of the conventional catalysts, especially the metal – loaded crystalline aluminosilicates used as the support components in the catalysts, is too high. Therefore, the use of such conventional catalysts in the hydrocracking processes whose purpose is mainly the production of useful middle distillates, such as kerosene distillates and gas oil distillates, from hydrocarbon – distillates having relatively high boiling points, such as atmospheric residues and vacuum residues, causes problems, including such a problem that large amounts of lighter distillates, such as naphtha distillates and gas distillates, are formed, so that the yield of the intended middle distillates becomes insufficient, although these catalysts are highly active in total reactions. In addition, it has frequently been pointed out that, since such metal – loaded crystalline aluminosilicates prepared by the conventional methods are, in general, too acidic unless their acid properties are improved, they have a disadvantage in that they are unsuitable for the use as a component of catalysts, or as that of the supports thereof, as far as the catalysts are intended to the use for conversion reactions of hydrocarbons, such as isomerization, catalytic cracking, alkylation and dehydrogenation, in a good selectivity and stability. Therefore, it has been an important subject to modify the acid properties of such conventional metal − loaded crystalline aluminosilicates as described above or crystalline al − uminosilicates themselves which are precursors thereof (especially, to decrease their acidity or to control their acid strength) so as to attain improvements in selectivity, such as the depression of the excess or deep cracking, or those in catalyst − life or operation − stability with the depression of coke deposition.

Heretofore, in order to improve the acid properties, modification of crystalline aluminosilicates by hydrothermal treatments or especially by steaming at high temperatures has been generally carried out. For example, a method for hydrocracking of a hydrocarbon feedstock has been proposed, wherein the hydrocracking is carried out by using a catalyst which was prepared by modifying an $NH_4 − Y −$ type zeolite by means of a self − steaming technique (a technique by which the steaming of a solid substance is carried out with the steam generated from the water contained in the substance, such as crystal water, by increasing the temperature), followed by treating with a solution of an acidic aluminum salt (Specification of U.S. Patent No. 4,415,519). In addition, a method for hydrocracking of hydrocarbons has been proposed, wherein the hydrocracking is carried out by using a steamed zeolite itself as a catalyst with an intention of improving the yield of middle distillates (Japanese Patent Application Kokoku − Koho (Publication) No. 59 − 4474). Furthermore, in the specification of Japanese Patent Kokoku − Koho (Publication) No. 61 − 24433 described is a method for hydrocracking of a distillation − residual oil by using an iron − loaded zeolite obtained by bringing a steamed zeolite into contact with a solution of an iron compound, as a catalyst.

In the case of such hydrothermal treatments, a decrease in the acidity as well as a modification in the acid strength is caused by dealumination of the crystalline aluminosilicates. However, in such conventional methods for improving the acid properties by hydrothermal treatments, since crystalline aluminosilicates should be treated under severe conditions, i.e., under a steam atmosphere at high temperatures, for dealumination, a destruction of the crystal structure easily occurs, which tends to cause a degradation of intrinsic catalytic properties of the crystalline aluminosilicates and a problem, such as a decrease in the catalytic performance in hydrocracking. In addition, in such conventional methods there are other problems as follows. That is, it is usually very difficult to find such operational conditions under which the dealumination of crystalline aluminosilicates can sufficiently be performed without the deconstruction of their crystal structures. Even though it is possible, since such a particular dealumination requires a very accurate control of the operation conditions, the operations would inevitably be complex. Furthermore, since the dealumination by hydrothermal treatments must be conducted at elevated temperatures, it requires a large energy consumption, and consequently the manufacturing cost becomes high.

In conclusion, theretofore, such a method by hydrothermal treatment has generally been recognized to be the most promising method for improving the acid properties of crystalline aluminosilicates or metal − loaded crystalline aluminosilicates which are derivatives therefrom. However, even in the case that an intended improvement of their acid properties is actually and suitably performed, there are still various problems, such as a difficulty in producing reliable products steadily, a requirement of complex operations and a high cost for producing such products with the conventional method.

The present invention has been completed in view of the circumstances as described above.

SUMMARY OF THE INVENTION

An object of the present invention is to provide a method for preparing an improved, metal − loaded crystalline aluminosilicate which is very useful and practical. The method is advantageous in that the catalytic properties, such as acid properties (properties relating to the acid strength and the acidity), of metal − loaded crystalline aluminosilicates can easily and suitably be improved at a low cost or can widely and stably be controlled with simple operations so that, when the resulting improved metal − loaded crystalline aluminosilicates are used as a main component of catalysts, or as a component of the support thereof, they can so improve the catalytic properties that the resulting catalysts can advantageously be employed in various hydrocarbon − conversion processes with sufficient catalytic activities and selectivities, especially in selective hydrocracking processes aimed at producing selectively middle distillates, such as kerosene distillates and gas oil distillates, in a better yield from relatively high boiling point hydrocarbon distillates, such as atmospheric residues and vacuum residues, with excess or deep cracking into naphtha distillates or gas distillates depressed. Therefore, the improved, metal − loaded crystalline aluminosilicates prepared according to the method can preferably be used as a component of such catalysts or that of the support thereof.

3

Another object of the present invention is to provide a process for the conversion of hydrocarbons, wherein the process is improved, so as to be very advantageous in practical use, by the use of a catalyst obtained from the improved, metal – loaded crystalline aluminosilicate prepared by the method as described above and improved in its properties, such as acid properties, so that the process can preferably be applied to hydrocarbon – hydrocracking processes, especially, to those aimed at producing middle distillates, such as kerosene distillates and gas oil distillates, easily and stably in a high yield from relatively high boiling point hydrocarbon distillates, such as atmospheric residues and vacuum residues, with depressing excess or deep cracking into naphtha distillates or gas distillates, or to other various hydrocarbon – conversion processes.

In order to attain the above described objects, the inventors have extensively studied for developing an effective method for preparing improved, metal – loaded crystalline aluminosilicates which can effectively be used as a component of hydrocarbon – conversion catalysts or as that of the support thereof, and are suitable for preparing such catalysts having both high catalytic activity and sufficient selectivity in hydrocarbon – hydrocracking processes, especially, in those aimed at producing middle distillates, such as kerosene distillates and gas oil distillates, in a sufficiently better yield from relatively high boiling point hydrocarbon distillates, such as atmospheric residues and vacuum residues, with depressing sufficiently excess or deep cracking into naphtha distillates or gas distillates, or in other various hydrocarbon – conversion reactions, such as catalytic cracking, alkylation, isomerization or hydro – treating, wherein such improved, metal – loaded crystalline aluminosilicates can easily and stably be prepared with simple operations and at low cost by the method. As the result of our preparative studies, we have considered that, in order to obtain such conversion catalysts having at least a high catalytic activity, metal – loaded crystalline aluminosilicates must have at least a sufficient acid function, and in addition when used as catalytic components, they are required to contain metal components having a sufficient hydrogenation activity. We have recognized that the above described objects may be attained if we develop a method which, even without such a conventional steaming treatment, is effective for improving the acid properties (controlling the acid strength and decreasing the acidity) of metal – loaded crystalline aluminosilicates obtained by loading certain kinds of transition metal components on or into natural or synthetic crystalline aluminosilicates. Thus, we have extensively studied to develop an effective method for improving their acid properties. As the result of these studies, we have found that the acid properties of metal – loaded crystalline aluminosilicates can be easily improved or widely controlled to intended levels by bringing them into contact with an aqueous solution of an alkali metal salts and/or an alkaline earth metal salt, namely by means of a very simple operation. Furthermore, we have confirmed that thus improved, metal – loaded crystalline aluminosilicates, which are those whose catalytic properties, including acid properties, have already been improved, can effectively be used as a component of hydrocarbon – conversion catalysts, or that of the support thereof, wherein they can used as such or as formed materials having intended shape and size, or after loading suitable, additional metal components on or into them at need, to obtain such catalysts or supports, and that the hydrocarbon – conversion catalysts thus prepared can effectively used for respective hydrocarbon – conversion processes, especially for selective hydrocarbon – hydrocracking pro – cesses, as described above.

On the basis of the above described findings and facts, we have eventually completed the present invention.

That is, the present invention provides a method for preparing an improved, metal – loaded crystalline aluminosilicate, comprising bringing a metal – loaded crystalline aluminosilicate into contact with a solution of a metal salt selected from the group consisting of a salt of an alkali metal, a salt of an alkaline earth metal and a mixture thereof, the metal loaded crystalline aluminosilicate comprising a crystalline al – uminosilicate and at least one transition metal oxide selected from the group consisting of an oxide of Fe, an oxide of Ni, an oxide of Co, an oxide of Cu, an oxide of Mo, an oxide of W, an oxide of Mn, an oxide of Cr, an oxide of Pd, an oxide of Pt and a mixture thereof, the transition metal oxide being supported on or incorporated into the crystalline aluminosilicate.

Furthermore, as a suitable use of the improved, metal – loaded crystalline aluminosilicate prepared by the method of the present invention, the present invention provides a process for conversion of hydrocar – bons, comprising bringing a hydrocarbon into contact with a hydrocarbon – conversion catalyst, the hydrocarbon – conversion catalyst being prepared from the improved metal – loaded crystalline al – uminosilicate.

4

PREFERRED EMBODIMENTS OF THE INVENTION

In the preparation method of the present invention, various crystalline aluminosilicates may be used as the crystalline aluminosilicate (hereinafter, it will sometimes be referred to as crystalline aluminosilicate [I]) to be loaded with the certain transition metal as described above, and preferred ones have an $Na_2O$ content of not more than 2.4 % by weight and a molar $SiO_2/Al_2O_3$ ratio of at least 3.5. Crystalline aluminosilicates having an $Na_2O$ content of more than 2.4 % by weight or a molar $SiO_2/Al_2O_3$ ratio of less than 3.5, due to their insufficient acidity, unsuitable pore structures or insufficient stability as catalyst components, may cause a difficulty in preparing catalysts exhibiting sufficiently high activity in hydrocarbon – conversions, such as hydrocracking of hydrocarbons, failing in attaining the object of the present invention. A particularly preferred value of the molar $SiO_2/Al_2O_3$ ratio is generally 4.6 or more.

Some examples of the crystalline aluminosilicate [I] include synthetic and natural zeolites, and more concrete examples include synthetic zeolites, for example, synthetic faujasite – type zeolites, such as Y – type zeolites, pentasyl – type zeolites, such as L – type zeolites, mordenite and ZSM – 5, natural faujasites and natural mineral – type zeolites or crystalline aluminosilicates, such as clinoptilolite. Particularly preferred are Y – type zeolites.

These crystalline aluminosilicates may be ones improved in the heat resistance or changed in the acid properties by steaming treatment.

These crystalline aluminosilicates may be used individually or in a combination of two or more of them, for example, as a mixture, according to demand. Further, these crystalline aluminosilicates may contain other additives, such as binder components, at need, as far as the object of the present invention can be attained.

According to the method of the present invention, the objective, improved, metal – loaded crystalline aluminosilicate (hereinafter, it will sometimes be referred to as metal – loaded crystalline aluminosilicate [III]) is prepared by using a metal – loaded crystalline aluminosilicate (hereinafter, it will sometimes be referred to as metal – loaded crystalline aluminosilicate [II]) comprising the above described crystalline aluminosilicate [I] and an oxide of the above described certain transition metal (namely, at least one transition metal selected from the group consisting of Fe, Ni, Co, Cu, Mo, W, Mn, Cr, Pd and Pt) and by bringing the metal – loaded crystalline aluminosilicate [II] into contact with a solution of an alkali metal salt and/or alkaline earth metal salt (hereinafter, it will sometimes be referred to as alkali salt solution).

That is, the metal – loaded crystalline aluminosilicate [II] to be brought into contact with the alkali salt solution is the one wherein at least one of the above described transition metals is supported in a form of an oxide or oxides, on the crystalline aluminosilicate [I]. The form of these transition metal oxides supported is not limited to a particular form. That is, it should be understood that various oxidized forms of the transition metal or metals are all referred to as a oxide or oxides thereof, here. In addition, these transition metals supported as such oxides may have a particular or various or mixed valence states (oxidation numbers). In general, the composition of such metal oxide components as supported oxides or mixed oxides of these types is very complex and variable. Since supported oxides or composite oxides are usually present in combined forms whose compositions cannot always be specified, a metal component is usually expressed formally a metal component by a simple form of a metal oxide, such as a chemical formula $Me_xO_y$, especially in catalytic fields. In accordance with this custom wherein oxides of various forms are lumped together and expressed formally as a single oxide, the transition metal oxide used in the present invention may be expressed, for example, by $Me_xO_y$, wherein Me is Fe, Ni, Co, Cu, Mo, W, Mn, Cr, Pd or Pt, x is usually 1 or 2, and y is usually 1 or 3. For example, the iron may be in the form of $Fe^{2+}$ or $Fe^{3+}$, or in a mixed form of them, such as $Fe_3O_4$, and these states of iron are formally and simply represented by FeO and/or $Fe_2O_3$ according to the $Me_xO_y$ – expression. As a matter of fact, the supported transition metals may be totally present as their oxides in some cases, or may be partly in metallic states in other cases.

A preferred ratio of the transition metals supported on the metal – loaded crystalline aluminosilicate [II] is generally 0.2 to 50 % by weight, more preferably 0.5 to 30 % by weight, as determined as oxides of the transition metals ($Me_xO_y$), based on the total weight (100 % by weight) of the metal – loaded crystalline aluminosilicate [II]. Herein, the supporting ratio (the value of the % by weight) is calculated on the assumption that the transition metals are supported in the forms of $Me_xO_y = Fe_2O_3$, NiO, CoO, CuO, $Cr_2O_3$, $MoO_3$, $WO_3$, $MnO_2$, PdO and PtO, respectively.

The metal – loaded crystalline aluminosilicate [II] may be prepared by various methods, including known methods. Therefore, there is no particular limitation in the method for depositing the transition metal component on the crystalline aluminosilicate [I], and various methods may be employed, for example, an ion – exchange method, an impregnation method, a dipping method, an adsorption method, a kneading method or a combination thereof. An example of the method suitable for depositing iron in the form of $Fe^{3+}$

5

($Fe_2O_3$) is an ion − exchange method, wherein an aqueous solution of $Fe(NO_3)_3$ is used. Further, there is no particular limitation in the method for oxidizing the transition metal component supported, and various methods may be employed, for example, a thermal decomposition method or an air − calcination method. A preferred example is an air − calcination method according to a common method. In the case of an ion − exchange method, the slurry obtained by removing the excessive metal salt solution may be used as such, without subjecting the slurry to drying and calcination.

It is one of the important points of the method of the present invention that the metal − loaded crystalline aluminosilicate [II] is treated by bringing it into contact with the above described alkali salt solution (a solution of alkali metal salts and/or alkaline earth metal salts).

The alkali metals in the alkali metal salts includes Li, Na, K, Rb and Cs. Among these, preferred examples are Na and K, and a particularly preferred is Na.

The alkaline earth metals in the alkaline earth metal salts includes Be, Mg, Ca, Sr, Ba and Ra. Among these, preferred examples are Mg, Ca, Sr and Ba, and a particularly preferred is Mg.

As to the alkali metal salt and the alkaline earth metal salt, the kind of salt (anion component) is not particularly limited, and examples of those usually and suitably used include halides, such as chloride, salts of mineral acids, such as sulfate and nitrate, and salts of organic acids. A particularly preferred example of the alkali metal salt is NaCl, and a particularly preferred example of the alkaline earth metal salt is $MgCl_2$.

The alkali metal solution is a solution of at least one metal salt selected from the group consisting of the above described alkali metal salts and alkaline earth metal salts. Generally, suitable alkali salt solution is an aqueous solution.

The concentration of the alkali component (alkali metal salts and/or alkaline earth metal salts) in the alkali salt solution to be brought into contact with the metal − loaded crystalline aluminosilicate [II] is adjusted generally so that the total concentration of the alkali metal ions and the alkaline earth metal ions ranges from 0.01 to 10 N, preferably from 0.05 to 5 N.

The amount of the alkali salt solution used for treating the metal − loaded crystalline aluminosilicate [II] is generally 1 to 100 parts by volume, preferably 4 to 50 parts by volume, per part by volume (apparent volume) of the solid particles of the metal − loaded crystalline aluminosilicate [II].

Although the shape and particle size of the solid particles to be brought into contact with the alkali salt solution are not particularly limited, preferred are those of not more than 1.0 mm, more preferably 0.2 mm to 0.5 $\mu$m, in average particle diameter since it is desirable to carry out the contact in a slurry state.

Various methods may be utilized for bringing the metal − loaded crystalline aluminosilicate [II] into contact with the alkali salt solution, and preferred examples include a mixing − stirring method, a dipping method and an impregnation method.

The treatment by means of the contact with the alkali salt solution may suitably be carried out at temperatures ranging from room temperature to 100 ˚C, preferably 50 to 100 ˚C. The time of the contact ranges generally from an instant to 10 hours, preferably from 30 minutes to three hours.

By the contact with the alkali salt solution, the metal − loaded crystalline aluminosilicate [II] can easily be improved in its catalytic properties, mainly in its acid properties, due to the controlled acid strength and the controlled (decreased) acidity. The improved, metal − loaded crystalline aluminosilicate [III] thus ob − tained has a moderate acid strength and a moderate acidity which enable the metal − loaded crystalline aluminosilicate [III] to maintain a high activity and to exhibit a sufficiently improved selectivity during their use in the above described various hydrocarbon − conversions.

After the treatment by means of the contact with the alkali salt solution, the treated solid is separated from the solution, for example, by a filtration, at need. In the case of an impregnation method, the impregnated product is collected as a solid by evaporating out the solvent. Although the solid obtained after the treatment with the alkali salt solution may be used as such, it is usually preferable to wash it with water or warmed water.

In general, the solid thus obtained is preferably dried and then calcined by common methods. The temperature of the drying is generally 50 to 150 ˚C. The time sufficient for the drying is approximately one to 10 hours. The temperature of the calcination is generally 400 to 550 ˚C. The time sufficient for the calcination is approximately 30 minutes to 6 hours.

Thus, the objective metal − loaded crystalline aluminosilicate [III], namely the improved, metal − loaded crystalline aluminosilicate can be prepared.

By the method of the present invention, since the catalytic properties, such as acid properties, of metal − loaded crystalline aluminosilicates can widely be controlled and improved to an intended range by means of an extremely simple operation of the contact with an alkali salt solution, metal − loaded crystalline aluminosilicates having catalytic properties, including acid properties, equal to or superior to those of steamed ones can be prepared easily, even without employing the conventional steaming treatments.

6

Therefore, according to the method of the present invention, the metal−loaded crystalline aluminosilicate [III], which is a metal−loaded crystalline aluminosilicate having improved catalytic properties, including improved acid properties, can advantageously and stably be prepared by an extremely simple operation, in a low cost.

The metal−loaded crystalline aluminosilicate [III] prepared by the method of the present invention may suitably be used as it is as a catalyst for various reactions or as a support component of the catalyst, or may be used after formed into catalyst materials or supports of desired shapes and compositions in accordance with common methods, for example, by using a suitable binder component. According to demand, it may further be loaded with suitable metal components to modify it into various catalysts or catalyst components suitable for specific reactions. For example, in catalytic fields, it may suitably be used as a catalyst for conversion of hydrocarbons, such as the hydrocracking of hydrocarbons as described below. Of course, it may also be used in fields other than the catalytic fields.

The process for the conversion of hydrocarbons according to the present invention is characterized in bringing hydrocarbons into contact with a hydrocarbon−conversion catalyst which is prepared from the improved, metal−loaded crystalline aluminosilicate prepared by the above described method of the present invention, namely the metal−loaded crystalline aluminosilicate [III].

Some examples of the conversion reaction of hydrocarbons include hydrocracking, catalytic cracking, hydro−treating, isomerization, alkylation and dehydrogenation of various hydrocarbons. Of course, the process of the present invention may also be a complex reaction process comprising two or more of these reactions. An example of the hydrocarbon−conversion particularly suitable for the process of the present invention is a hydrocracking process for producing middle distillates, such as kerosene distillates and gas oil distillates, in an increased yield, from hydrocarbon distillates of relatively high boiling points, such as atmospheric residues and vacuum residues, by depressing sufficiently the generation of light distillates, such as naphtha distillates and gas distillates, namely excess or deep cracking.

These various conversion reactions of hydrocarbons have been carried out by using conversion catalysts of various compositions and shapes. The catalyst to be used in the process of the present invention is prepared by using the metal−loaded crystalline aluminosilicate [III]. In the process of the present invention, the metal−loaded crystalline aluminosilicate [III] may be used as it is as the catalyst or as a catalyst component. However, in many cases, it is used after formed into a catalyst material or a support of a desired shape and a desired composition according to common methods, for example, by using a suitable binder component. At the time of forming, the metal−loaded crystalline aluminosilicate [III] may further be loaded with suitable metal components to adapt the resulting catalyst to an intended use.

As above described, the shape of the metal−loaded crystalline aluminosilicate [III] to be used for the preparation of the catalyst or support component is varied depending on the intended hydrocarbon−conversion process.

The following is a description of a particularly suitable embodiment of the hydrocarbon−conversion process of the present invention, that is a hydrocracking of hydrocarbon distillates of relatively high boiling points, such as atmospheric residues or vacuum residues. Preferred examples of the preparation of the hydrocracking catalyst for the hydrocracking by using the metal−loaded crystalline aluminosilicate [III] will also be described.

The catalyst for the hydrocracking of the hydrocarbon distillates having relatively high boiling points (hereinafter, it will sometimes be referred to as hydrocracking catalyst [IV]) may be prepared by various preparation techniques, including known techniques, as far as the metal−loaded crystalline aluminosilicate [III] is used as a catalyst component or a support component. The following method is particularly suitable for the preparation thereof.

First, the metal−loaded crystalline aluminosilicate [III], preferably the one air−calcined under the above described calcination conditions, is formed into a support, and the formed support is then loaded with at least one of Ni and Co and at least one of Mo and W, to prepare a desired hydrocracking catalyst [IV].

The support may suitably be prepared by mixing the metal−loaded crystalline aluminosilicate [III] with a binder component, forming the mixture according to a common method, and then drying and calcining the formed product.

Although the metal−loaded crystalline aluminosilicate [III] may contain any of the above described transition metals, particularly preferred examples are those wherein Me is Fe, Ni, Co or Mo. Although the particle diameter of the metal−loaded crystalline aluminosilicate [III] to be mixed with the binder component is not particularly limited, a preferred range of the average particle diameter is 1.0 mm or less, more preferably from 0.2 mm to 0.5 $\mu$m.

The binder component may be any one, for example, one selected from those used conventionally in this kind of field, and typical examples include refractory inorganic oxides, such as alumina, silica−alumina, silica, alumina – boria and alumina – titania, and clays. Particularly preferred are alumina and ones whose main component is alumina. The inorganic oxides to be used as the binder component may be of various states, for example, hydrates, hydroxides or hydroxyoxides, and also may be used for the mixing in various states, for example, fine – powdery slurry, gel, such as hydrogel, sol or hydrates. For example, alumina may suitably be used in the form of alumina gel. When mixed with the metal – loaded crystalline aluminosilicate [III], the alumina gel may be mixed together with other third additive components, such as a silica component, a boria component, a titania component or a zirconia component.

These binder components may be used individually or in a combination of two or more of them. According to demand, other additives, such as binder components other than the above described inorganic materials, or various binding agents may also be added.

Suitable mixing ratios of the metal – loaded crystalline aluminosilicate [III] and the binder component are generally 90 to 10 % by weight of the former and 10 to 90 % by weight of the latter, based on the total of the two. The method of mixing is not particularly limited, and a suitable example is a wet kneading method.

The forming may be carried out by using various methods, including known methods. The shape of the formed support is not particularly limited, and preferred examples are a cylindrical or tri – lobe form of 1/32 to 1/16 inch in size.

Usually, it is preferable to dry the formed support thus obtained, followed by a calcination at appropriate temperatures. The temperature and time sufficient for the drying are generally 50 to 300 $°C$ and from 15 minutes to 10 hours, respectively. For example, the calcination may usually and suitably be performed by calcining the dried support in air at a temperature of 400 to 600 $°C$ for 30 minutes to 6 hours.

The hydrocracking catalyst [IV], namely the catalyst suitable for the hydrocracking of the hydrocarbon distillates of relatively high boiling point, may be prepared by depositing cobalt and/or nickel (component A) and molybdenum and/or tungsten (component B) on the support thus obtained, preferably on the calcined support. The combination of the component (A) and the component (B) may be various ones, and some examples of the combination include Ni – W. Ni – Mo, Co – W, Co – Mo, Ni – Co – W, Ni – W – Mo and Co – Ni – Mo.

The metal components of the components (A) and (B) may be supported by various methods, including known supporting methods. In general, it is suitable to deposit aqueous solutions of compounds of the metals, for example, by an impregnation method or a dipping method, followed by drying and calcination for converting the metal compounds into oxides or compound oxides.

Various compounds may be used as the molybdenum compound to be deposited, and preferred examples include $MoO_3$, molybdic acid and molybdates, such as ammonium molybdate. Various compounds may be used as the tungsten compound, and preferred examples include $WO_3$, tungstic acid and tungstates, such as ammonium tungstate. These molybdenum compounds and tungten compounds may be used individually or in a combination of two or more of them as a mixture or a compound.

Various compounds may be used as the cobalt compound to be deposited, and preferred examples include cobalt nitrate, cobalt acetate and acidic cobalt carbonate. Various compounds may be used as the nickel compound, and preferred examples include nickel nitrate, nickel acetate and acidic nickel carbonate. These cobalt compounds and nickel compounds may be used individually or in a combination of two or more of them as a mixture or a compound.

In general, a suitable amount of the component (A) supported (supporting ratio), namely the total amount of cobalt and/or nickel, is 0.5 to 10 % by weight, preferably 2 to 6 % by weight, as determined as the corresponding oxides, NiO and CoO, based on the weight of the catalyst.

In general, a suitable amount of the component (B) supported (supporting ratio), namely the total amount of tungsten and/or molybdenum, is 7 to 30 % by weight, preferably 10 to 20 % by weight, as determined as the corresponding oxides, $WO_3$ and $MoO_3$, based on the weight of the catalyst.

After deposition of the metal compounds of the components (A) and (B), the deposition product thus obtained generally is dried and calcined, to obtain the hydrocracking catalyst [IV].

A preferred drying temperature is generally 50 to 300 $°C$. The time sufficient for the drying is generally 10 minutes to 10 hours. A preferred calcination temperature is generally 400 to 600 $°C$. The time sufficient for the calcination is generally 30 minutes to 6 hours.

Thus, the hydrocracking catalyst [IV], namely the catalyst which may suitably be used for the process for hydrocracking hydrocarbon distillates of relatively high boiling points, is obtained.

The above described hydrocracking of hydrocarbon distillates of relatively high boiling points, which is a preferred example of the hydrocarbon – conversion process of the present invention, may suitably be carried out by using the hydrocracking catalyst [IV] prepared in the manner as described above.

Examples of the hydrocarbon distillates of relatively high boiling points to be used as the material oil include atmospheric residues, vacuum residues, vacuum gas oils, heavy gas oils, catalytic cracking oils, solvent deasphalting oils and catalytic cracking gas oils. Preferred material oils are atmospheric residues, and a particularly preferred example is a fraction which contains at least 90 % by weight of distillates having boiling points of 343 ˚C or higher. These hydrocarbon distillates may be used individually or as a mixture of two or more of them. According to demand, fractions having boiling points of narrower ranges also may be used.

Although the reaction conditions suitable for the hydrocracking of these material oils generally depend on the kinds or properties of the material oils and cannot be specified uniformly, the following conditions may suitably be employed at least for the hydrocracking of the atmospheric residues and, in many cases, also may suitably be employed for other material oils.

A suitable range of the reaction temperature is generally 310 to 430 ˚C. In general, the hydrocracking reaction is carried out in the presence of hydrogen, with the partial pressure of the hydrogen adjusted generally to 50 to 200 kg/cm$^2$G.

As to the reaction system, although a non−continuous reaction system, such as a batch method, may be employed, in general, a continuous reaction system, such as a fixed−bed, a fluidized−bed, a moving−bed or a boiling−bed, may also suitably be employed. A suitable liquid hourly space velocity (LHSV), which is calculated from the feeding velocity of the material oil and the amount of the catalyst used, is generally 0.1 to 3.0 hr$^{-1}$.

Under the above described conditions, excessive or deep cracking of the various material oils (hydrocarbon distillates of relatively high boiling points) into naphtha distillates or gas distillates can be depressed, and middle distillates, such as kerosene distillates or gas oil distillates, are obtainable in high yields.

After−treatments, such as separation, collection and purification, of the reaction products may be carried out easily by common methods. Unreacted hydrogen and a part of the product oils may be recycled according to demand. When the catalytic activity is lowered below a predetermined level, regeneration treatments may be carried out for the purpose of repeated use. The regeneration of the catalyst may be performed easily by employing common methods.

It is a noticeable point that the improvement in the selectivity to the middle distillates attained by the process of the present invention is due to the use of the hydrocracking catalyst [IV] that is prepared by using the metal−loaded crystalline aluminosilicate [III] whose catalytic properties, such as acid properties, was improved by the method of the present invention by means of the contact thereof with the alkali salt solution. In fact, when hydrocracking catalysts were prepared by using metal−loaded crystalline aluminosilicates prepared in the same manner as that employed for the preparation of the metal−loaded crystalline aluminosilicate [III] with the exception that the contact with the alkali salt solution was not carried out, and the hydrocracking catalysts thus obtained were used for hydrocracking of atmospheric residues, etc., there was observed an increase in the yields of naphtha distillates and gas distillates due to excessive or deep cracking, with the yields of middle distillates, such as kerosene distillates and gas oil distillates, decreased.

In some cases, the improvement in the selectivity to the middle distillates may also be attained by using the conventional hydrocracking catalysts which are prepared by using, as support components, metal−loaded crystalline aluminosilicates whose acid properties have been improved by a steaming treatment. However, the hydrocracking processes employing such conventional hydrocracking catalysts will be disadvantageous for the reasons described above. That is, the steaming treatment involves problems in that it causes an increase in the cost of preparing the metal−loaded crystalline aluminosilicates and the catalysts prepared therefrom, and it cannot ensure a stable improvement. To the contrary, in the method of the present invention, since the improvement in the catalytic properties, such as acid properties, can be attained by a simple operation of the contact with alkali salt solutions, catalysts of high effectiveness can be prepared stably at a low cost. This also enables the hydrocracking process to be carried out more advantageously than the conventional methods.

Since hydrocarbon−conversion reactions other than the above described hydrocracking can as well be graced with such advantages of the present invention, the hydrocarbon−conversion process of the present invention is far more advantageous than the conventional processes.

Examples of the present invention are set forth below. It will be understood that these examples are for purposes of illustration only and are not to be construed as limiting the invention.

EXAMPLES 1 AND 2 AND COMPARATIVE EXAMPLE 1

⟨Preparation of metal−loaded crystalline aluminosilicates [II, III]⟩

A commercial Y−type zeolite ($Na_2O$ content: 0.4 % by weight, molar $SiO_2/Al_2O_3$ ratio: 5.6) and an aqueous ferric nitrate solution ($Fe(NO_3)_3$ concentration: 0.25 mol/l) in a volume eight times as much of the Y−type zeolite were introduced into a container equipped with a stirrer, and the mixture was stirred at 50 ˚C for two hours. Thereafter, the solid was filtered and washed with water, and the washed solid was dried at 50 ˚C for four hours, and was then calcined in an electric furnace at 500 ˚C for three hours. The calcination product thus obtained was treated again in the same manner as described above by using an aqueous ferric nitrate solution (the $Fe(NO_3)_3$ concentration is the same as above) in a volume eight times as much as the calcination product. Subsequently filtration, washing, drying and calcination were carried out in the same manner as above, to obtain an iron−loaded crystalline aluminosilicate (average particle diameter: 3 $\mu$m). Hereinafter the iron−loaded crystalline aluminosilicate will be referred to as zeolite A.

The zeolite A and an aqueous sodium chloride solution (NaCl concentration: 1.0 mol/l) in a volume eight times as much as the zeolite A were introduced in a container equipped with a stirrer, and the mixture was stirred at 100 ˚C for two hours. Thereafter, the solid was filtered and washed with water, and the washed solid was dried at 100 ˚C for three hours, and was then calcined in an electric furnace at 500 ˚C for three hours. The calcination product thus obtained was treated again in the same manner as above described by using an aqueous sodium chloride solution (the NaCl concentration is the same as above) in a volume eight times as much as the calcination product. Subsequently filtration, washing, drying and calcination were carried out in the same manner as above, to obtain an iron−loaded crystalline aluminosilicate (average particle diameter: 3 $\mu$m) (hereinafter, it will be referred to as zeolite B) containing 1.25 % by weight of Na component as $Na_2O$.

The zeolite B and an aqueous magnesium chloride solution ($MgCl_2$ concentration: 1.0 mol/l) in a volume eight times as much as the zeolite B were introduced in a container equipped with a stirrer, and the mixture was stirred at 100 ˚C for two hours. Thereafter, the solid was filtered and washed with water, and the washed solid was dried at 100 ˚C for three hours, and was then calcined in an electric furnace at 500 ˚C for three hours. The calcination product was treated again in the same manner as above described by using an aqueous magnesium chloride solution (the $MgCl_2$ concentration is the same as above) in a volume eight times as much as the calcination product. Subsequently filtration, washing, drying and calcination were carried out in the same manner as above, to obtain an iron−loaded crystalline aluminosilicate (average particle diameter: 3 $\mu$m)(hereinafter, it will be referred to as zeolite C) containing 1.36 % by weight of Mg component as MgO.

The compositions of the zeolite A, zeolite B and zeolite C are listed in Table 1.

TABLE 1

|  | zeolite B | zeolite C | zeolite A |
|---|---|---|---|
| $SiO_2/Al_2O_3$ (molar ratio) | 11.2 | 11.5 | 11.8 |
| $Me_xO_y$ ($Fe_2O_3$) (wt%) | 10.5 | 10.0 | 10.9 |
| $Na_2O$ (wt%) | 1.25 | ≤ 0.1 | ≤ 0.1 |
| MgO | − | 1.36 | − |

EXAMPLE 1

The zeolite B and an alumina gel (boehmite gel) were kneaded and were formed into cylindrical support (size: 1/16 inch). The support was dried at 120 ˚C for three hours and was then calcined at 550 ˚C for three hours. Thereafter, the calcined support was loaded with an aqueous solution containing nickel nitrate and ammonium tungstate by an impregnation method. The loaded support was dried at 120 ˚C for three hours and was then calcined at 550 ˚C for three hours in a stream of air, to obtain a catalyst (hereinafter, it will be referred to as catalyst B). The catalyst B comprised a support consisting of 60 % by weight of the zeolite B component and 40 % by weight of alumina component, the support supporting 4.25 % by weight of nickel component and 17.0 % by weight of tungsten component, as determined as NiO and $WO_3$, respectively, based on the weight of the catalyst B.

EXAMPLE 2

The zeolite C and an alumina gel (boehmite gel) were kneaded and were formed into cylindrical support (size: 1/16 inch). The support was dried at 120 °C for three hours and was then calcined at 550 °C for three hours. Thereafter, the calcined support was loaded with an aqueous solution containing nickel nitrate and ammonium tungstate by an impregnation method. The loaded support was dried at 120 °C for three hours and was then calcined at 550 °C for three hours in a stream of air, to obtain a catalyst (hereinafter, it will be referred to as catalyst C). The catalyst C comprised a support consisting of 60 % by weight of the zeolite C component and 40 % by weight of alumina component, the support supporting 4.25 % by weight of nickel component and 17.0 % by weight of tungsten component, as determined as NiO and $WO_3$, respectively, based on the weight of the catalyst C.

COMPARATIVE EXAMPLE 1

A calcined support (size: 1/16 inch) was prepared in the same manner as in Example 1 with the exception that the zeolite A was used in place of the zeolite B, and a catalyst (hereinafter, it will be referred to as catalyst A) was prepared in the same manner by using the calcined support. The catalyst A comprised a support consisting of 60 % by weight of the zeolite A component and 40 % by weight of alumina component, the support supporting 4.25 % by weight of nickel component and 17.0 % by weight of tungsten component, as determined as NiO and $WO_3$, respectively, based on the weight of the catalyst A.

⟨Hydrocracking⟩

Hydrocrackings were carried out under the following conditions by using the catalysts A, B and C as catalysts and by using as a material oil the atmospheric residue (Kuwait atmospheric residue KW−AR) having the properties as listed in Table 2.

TABLE 2

| | | |
|---|---|---|
| Specific gravity | 15/4 °C | 0.9620 |
| Viscosity | cSt (50 °C) | 302.0 |
| Sulfur | wt% | 3.81 |
| Nitrogen | wtppm | 2,330 |
| Nickel | wtppm | 14.0 |
| Vanadium | wtppm | 45.7 |
| 343 °C$^+$ | wt% | 95.0 |
| 525 °C$^+$ | wt% | 55.2 |

Reactor: fixed−bed flow reactor
Reaction pressure (hydrogen partial pressure): 100 kg/cm$^2$G
LHSV: 0.5 hr$^{-1}$; catalyst amount: 100 cc
Reaction temperature: 400 °C 410 °C, 420 °C
The reaction results are listed in Table 3.

TABLE 3

| | Example 1 | | Example 2 | | Comparative example 1 | | |
|---|---|---|---|---|---|---|---|
| Catalyst | catalyst B | | catalyst C | | catalyst A | | |
| Reaction temp. (°C) | 410 | 420 | 410 | 420 | 400 | 410 | 420 |
| a: Conversion * of 343 °C + distillates | 42 | 63 | 45 | 64 | 52 | 60 | 75 |
| b: Yield* of 171-343 °C distillates (yield of middle distillates) | 24 | 33 | 26 | 34 | 11 | 19 | 11 |
| Selectivity* to middle distillates (b/a × 100) | 57 | 52 | 58 | 53 | 21 | 32 | 15 |

* % by weight

## Claims

1. A method for preparing an improved, metal – loaded crystalline aluminosilicate, comprising bringing a metal – loaded crystalline aluminosilicate into contact with a solution of a metal salt selected from the group consisting of a salt of an alkali metal, a salt of an alkaline earth metal and a mixture thereof, the metal – loaded crystalline aluminosilicate comprising a crystalline aluminosilicate and at least one transition metal oxide selected from the group consisting of an oxide of Fe, an oxide of Ni, an oxide of Co, an oxide of Cu, an oxide of Mo, an oxide of W, an oxide of Mn, an oxide of Cr, an oxide of Pd, an oxide of Pt and a mixture thereof, the transition metal oxide being supported on or incorporated into the crystalline aluminosilicate.

2. The method of claim 1, wherein the solution of the metal salt contains the metal salt in a total metal ion concentration of 0.01 to 10 N, and one part by volume of the metal – loaded crystalline aluminosilicate is brought into contact with 1 to 100 part by volume of the solution of the metal salt.

EP 0 542 278 A1

3. The method of claim 1 or claim 2, wherein the crystalline aluminosilicate is selected from the group consisting of a natural crystalline aluminosilicate, a synthetic crystalline aluminosilicate and a mixture thereof, and has an $Na_2O$ content of not more than 2.4 % by weight and a molar $SiO_2/Al_2O_3$ ratio of at least 3.5, and the transition metal oxide is supported on or incorporated in the metal-loaded crystalline aluminosilicate in an amount of 0.2 to 50 % by weight, based on the amount of the metal-loaded crystalline aluminosilicate, with the proviso that the transition metals are determined as $Fe_2O_3$, NiO, CoO, CuO, $Cr_2O_3$, $MoO_3$, $WO_3$, $MnO_2$, PdO and PtO, respectively.

4. The method of claim 3, wherein the crystalline aluminosilicate is selected from the group consisting of a synthetic faujasite-type zeolite, an L-type zeolite, a mordenite, a pentasyl-type zeolite, a natural faujasite, a clinoptilolite, and a mixture thereof.

5. The method of claim 4, wherein the crystalline aluminosilicate is a Y-type zeolite, and the transition metal is Fe.

6. The method of any of the claims 1 to 5, wherein the solution of the metal salt is an aqueous solution of a salt of a metal selected from the group consisting of Na, K, Mg, Ca, Sr, Ba and a mixture thereof.

7. The method of claim 6, wherein the solution of the metal salt is an aqueous solution of NaCl or an aqueous solution of $MgCl_2$.

8. The method of claim 7, wherein the crystalline aluminosilicate is a Y-type zeolite, and the transition metal is Fe.

9. The method of any of the claims 1 to 8, wherein after the metal-loaded crystalline aluminosilicate is brought into contact with the solution of the metal salt, the metal-loaded crystalline aluminosilicate is dried at 50 to 150 °C for 1 to 10 hours and is then calcined at 400 to 550 °C for 30 minutes to 6 hours.

10. A process for conversion of hydrocarbons, comprising bringing a hydrocarbon into contact with a hydrocarbon-conversion catalyst, the hydrocarbon-conversion catalyst being prepared from the improved metal-loaded crystalline aluminosilicate prepared by the method of any one of claims 1 to 9.

11. The process for conversion of hydrocarbons of claim 10, wherein the conversion reaction is selected from the group consisting of hydrocracking, catalytic cracking, hydro-treating, isomerization, alkylation, dehydrogenation and a combination thereof.

12. The process for conversion of hydrocarbons of claim 11, wherein the conversion reaction is hydrocracking, and the hydrocarbon-conversion catalyst is prepared by forming the improved, metal-loaded crystalline aluminosilicate into a support shape, followed by depositing a metal selected from the group consisting of Ni, Co and a mixture thereof and a metal selected from the group consisting of Mo, W and a mixture thereof, on the improved, metal-loaded crystalline aluminosilicate of the support shape, in a total amount of Ni and Co of 0.5 to 10 % by weight and in a total amount of Mo and W of 7 to 30 % by weight, based on the total amount of the hydrocarbon-conversion catalyst, with the proviso that the metals are determined as NiO, CoO, $MoO_3$ and $WO_3$, respectively.

13. The process for conversion of hydrocarbons of claim 12, wherein the hydrocracking of the hydrocarbon is carried out at 310 to 430 °C, in the presence of hydrogen of a hydrogen partial pressure of 50 to 200 $kg/cm^2G$, at a LHSV of 0.1 to 3.0 $hr^{-1}$.

14. The process for conversion of hydrocarbons of claim 13, wherein the hydrocarbon is selected from the group consisting of an atmospheric residue, a vacuum residue, a vacuum gas oil, a heavy gas oil, a catalytic cracking residue, a solvent deasphalting oil, a catalytic cracking gas oil and a mixture thereof.

15. The process for conversion of hydrocarbons of claim 14, wherein the hydrocarbon is an atmospheric residue.

13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-5 053 372 (BROWNSCOMBE)<br><br>* column 2, line 33 - column 4, line 29 *<br>* column 6, line 21 - column 9, line 43 *<br>* column 11, line 34 - line 57; table 2 *<br>--- | 1-4,6,7, 9-11 | B01J29/06<br>B01J29/14<br>C10G47/20 |
| X | US-A-4 157 292 (O'HARA ET AL.)<br><br>* the whole document *<br>--- | 1,3-6, 9-15 | |
| X | US-A-4 458 025 (LEE ET AL.)<br><br>* column 11, line 25 - column 12, line 41 *<br><br>--- | 1,4-6,9, 10 | |
| X | US-A-4 179 356 (O'HARA ET AL.)<br><br>* the whole document *<br>--- | 1,3-6, 9-15 | |
| A | US-A-4 052 337 (NISHIKAWA ET AL.)<br><br>* claims 1,2; examples 1,2 * | 1-4,6,7, 9 | |
| | ----- | | TECHNICAL FIELDS SEARCHED (Int. Cl.5)<br><br>B01J<br>C10G |

The present search report has been drawn up for all claims

| Place of search | Date of completion of the search | Examiner |
|---|---|---|
| THE HAGUE | 26 FEBRUARY 1993 | CUBAS ALCARAZ J.L. |